(19) Europäisches Patentamt

European Patent Office

Office européen des brevets

(11) Veröffentlichungsnummer: **0 054 754**
A2

## (12) EUROPÄISCHE PATENTANMELDUNG

(21) Anmeldenummer: 81109877.1

(22) Anmeldetag: 25.11.81

(51) Int. Cl.³: **B 09 B 3/00**, B 03 B 9/06, B 29 C 29/00, D 21 B 1/32

(30) Priorität: 19.12.80 DE 3048095

(43) Veröffentlichungstag der Anmeldung: 30.06.82
Patentblatt 82/26

(84) Benannte Vertragsstaaten: **AT BE CH DE FR GB IT LI NL**

(71) Anmelder: **Eirich, Hubert, Sandweg 16, D-6969 Hardheim (DE)**
Anmelder: *Eirich, Paul, Bahnhofstrasse 11, D-6969 Hardheim (DE)*
Anmelder: **Eirich, Walter, Spessartweg 16, D-6969 Hardheim (DE)**

(72) Erfinder: **Eirich, Hubert, Sandweg 16, D-6969 Hardheim (DE)**
Erfinder: **Eirich, Paul, Bahnhofstrasse 11, D-6969 Hardheim (DE)**
Erfinder: **Eirich, Walter, Spessartweg 16, D-6969 Hardheim (DE)**

(74) Vertreter: **Weber, Dieter, Dr. et al, Patentanwälte Dr. D. Weber und Dipl.-Phys. K. Seiffert Gustav-Freytag-Strasse 25, D-6200 Wiesbaden 1 (DE)**

(54) Verfahren zur Abtrennung von Kunststoffabfällen von Abfallgemischen.

㊙ Um von Abfallgemischen Kunststoffabfälle derart abzutrennen, daß sie nicht gemeinsam mit Papierabfällen oder anderen leichten Stoffen anfallen, wird der kunststoffhaltige Abfall in feuchtem Zustand zerkleinert, gemischt und agglomeriert und das so erhaltene Gemisch in Agglomerat und Kunststoffteile aufgetrennt.

EP 0 054 754 A2

COMPLETE DOCUMENT

Die Erfindung betrifft ein Verfahren zur Abtrennung von Kunststoffabfällen von diese enthaltenden Abfallgemischen, wobei als Abfallgemische solche beliebigen Ursprungs gemeint sind, wie beispielsweise Hausmüll, Gewerbemüll oder Industrieabfälle.

Seit einigen Jahren besteht der ständig wachsende Wunsch, Abfall, wie Hausmüll und Gewerbemüll, einer Wiederverwendung zuzuführen. Bei dieser stehen derzeit im Vordergrund die Kompostierung, thermische Verfahren, wie beispielsweise die Müllverbrennung unter Energieerzeugung oder die Verwendung des Abfalles als Brennstoff in der Zement- und keramischen Industrie oder die Verwendung des Abfalles als Ausbrennstoff bei der keramischen Industrie.

Für alle diese Verwendungen ist es erforderlich oder zumindest vorteilhaft, die in den Abfallgemischen enthaltenen Kunststoffabfälle daraus zu entfernen, da diese bei der Wiederverwendung des Mülls Nachteile ergeben.

Bei der Kompostierung wirken die nicht oder nur langsam verrottenden Kunststoffe auf den Beeten und Feldern optisch abstoßend. Bei allen thermischen Verfahren führen die Kunststoffabfälle zu einer starken giftigen und korrosiven Belastung der Rauchgase, so daß zur Vermeidung einer Umweltgefährdung aufwendige Gasreinigungsanlagen nachgeschaltet werden müßten. Bei der Verwendung als Ausbrennstoffe in der keramischen Industrie entstehen ebenfalls giftige und korrosive Gase aus den Kunststoffen, und durch zu heftige Wärme- oder Gasentwicklung können die Keramikkörper Risse bekommen.

Es sind bereits Verfahren zur Abtrennung der Kunststoffabfälle von Abfallgemischen bekannt, die nach dem Prinzip der Windsichtung oder Schwerkrafttrennung arbeiten. Derartige Verfahren sind jedoch maschinentechnisch und damit bezüglich der Investitions- und damit Betriebskosten sehr aufwendig und haben außerdem den Nachteil, daß sie Kunststoff-

0054754

abfälle nur zusammen mit Papierabfällen gemeinsam abscheiden, ohne daß eine Trennung zwischen Papier und Kunststoffen erfolgen. Papier aber soll erwünschtermaßen in den Abfallgemischen verbleiben, da es für die Kompostierung wie auch für thermische Verfahren von Vorteil ist.

Es ist auch bereits ein Verfahren bekannt, das Papier von Kunststoffabfällen trennt, indem die Gemische von Papier- und Kunststoffabfällen so lange in Wasser aufgerührt werden, bis das Papier sich zu einer Pulpe z.B. mit etwa 95 % Wasseranteil auflöst, die dann mechanisch, z.B. durch Sieben, von den Kunststoffabfällen getrennt werden kann. Ein solches Verfahren ist aber so aufwendig, daß es wirtschaftlich nur bei der Papierherstellung benutzt werden kann, weil für andere Verwendungszwecke die Cellulosefasern wieder von dem Wasser abgetrennt werden müßten. Hinzu kommt, daß dieses Verfahren eine erhebliche Abwasserbelastung mit sich bringt.

Bestimmte Papiersorten, z.B. hygienische Papiere, Zeitungspapier usw., besitzen bereits eine deutlich niedrigere Reißfestigkeit als Kunststoffe. Bei festeren Papieren muß diese jedoch reduziert werden. Hierfür eignet sich insbesondere ein Aufweichen der Papierfasern durch Einwirkung von Feuchtigkeit.

Je nach dem Ursprung der Abfälle können die Abfallgemische hierfür bereits genügend Feuchtigkeit enthalten, oder man muß ihnen die erforderliche Feuchtigkeit von außen zuführen. Abfallgemische mit hohen Anteilen feuchtigkeitshaltiger pflanzlicher Bestandteile, wie beispielsweise angefaulter Früchte oder dergleichen, wie sie etwa bei Großmärkten anfallen können, brauchen häufig keinen zusätzlichen Wasserzusatz. Bei Hausmüll oder anderen gewerblich anfallenden Abfallgemischen dagegen ist es häufig erforderlich, den Feuchtigkeitsgehalt vor oder beim Zerkleinern durch Zuführung von Wasser oder wasserhaltiger Komponenten entsprechend einzustellen.

0054754

Zweckmäßig wird der Feuchtigkeitsgehalt des kunststoffhaltigen Abfalles vor oder bei dem Zerkleinern so eingestellt, daß die feuchtigkeitsaufnehmenden Komponenten eine gegenüber den enthaltenen Kunststoffen deutlich verschiedene Reißfestigkeit bekommen, wie vorzugsweise auf mindestens 35 Gewichts-%, bezogen auf das Gewicht des feuchten Abfalles. Die Einstellung kann durch Zugabe von Wasser oder Wasserdampf, aber auch beispielsweise durch Zugabe von Schlamm, wie beispielsweise Klärschlamm oder Altöl, erfolgen. Die Feuchtigkeit kann, besonders bei einstufiger Zerkleinerung vor der ersten Zerkleinerungsstufe, z.B. durch Besprühen oder Beregnen der abgelagerten Abfälle, zugegeben werden. Sie kann auch aufgeteilt auf die Zerkleinerungs- und Agglomerierstufe zugegeben werden.

Die Zerkleinerungsvorrichtung soll eine solche Beschaffenheit und Effektivität besitzen, daß bei annehmbaren Verweilzeiten mit Ausnahme der Kunststoffabfälle alle übrigen Komponenten ausreichend zerkleinert werden, um nach der Zerkleinerung zu agglomerieren. Dabei wird davon ausgegangen, daß nicht zerkleinerungsfähige Bestandteile, insbesondere Metallteile, vorher etwa durch Magnetabscheidung, aus den Abfallgemischen entfernt wurden.

Die Zerkleinerung erfolgt zweckmäßig mit solcher Energie, daß vorwiegend nur Stoffe geringerer Reißfstigkeit als die der enthaltenen Kunststoffe zerkleinert werden.

Als Zerkleinerungsvorrichtungen kommen beispielsweise Hammermühlen, Prallmühlen, Prallreißer oder Kugelmühlen in Betracht. Prallreißer mit ihrer einstellbaren Verweilzeit sind für das erfindungsgemäße Verfahren besonders geeignet. Zweckmäßig verwendet man solche Zerkleinerungsvorrichtungen, die eine ausreichende Zerkleinerung während 20 Sekunden bis 10 Minuten ermöglichen. Je nach Auswahl der Zerkleinerungsvorrichtung kann die Agglomerierung in der gleichen Vorrichtung wie die Zerkleinerung erfolgen, wobei dann gewöhnlich innerhalb des angegebenen Bereiches längere Verweilzeiten, wie beispielsweise von 1 bis 10 Minuten, angewendet werden müssen. Die Zerkleinerung kann aber auch in einer anderen Vorrichtung als die Agglomerierung erfolgen, indem nach der Zerkleinerung, die dann zweckmäßig bei kürzeren Verweilzeiten, wie solchen von 30 Sekunden bis 5 Minuten, vorzugsweise von 30 Sekunden bis 2 Minuten, erfolgt, das zerkleinerte Gut aus der Zerkleinerungsvorrichtung in einen Mischgranulator oder Schrägtellergranulator überführt wird. Dabei kann es zweckmäßig sein, eine Zwischenlagerung vorzusehen, bei der die saugfähigen Komponenten des zerkleinerten Gemisches intensiver Feuchtigkeit aufnehmen und dabei weiter an Festigkeit verlieren. Bei der Agglomerierung in der zweiten Bearbeitungsstufe können die zerkleinerbaren Stoffe auch einer weiteren Feinzerkleinerung unterworfen werden.

Bei dem Mischen und Agglomerieren werden die Gemische einer mechanischen Bearbeitung unterzogen, die die feinteiligen Komponenten in einen krümeligen bis granalienförmigen Zustand überführt, wobei die saugfähigen und weichen Bestandteile, wie Cellulosematerialien, mit den übrigen Komponenten verknetet und in diese eingebunden werden. Nicht einbinden lassen sich dagegen die bei der Zerkleinerung relativ grobteilig verbliebenen wasserabweisenden Kunststoffteile und Folienfetzen, so daß man am Ende der Agglomerierung ein Gemisch von feuchtem Agglomerat und Kunststoffteilen unterschiedlicher Größe bekommt. Dieses Gemisch läßt sich durch die Agglomerierung leicht sieben, wobei das krümelige bis fein granulierte Agglomerat durch das Sieb hindurchfällt, während die Kunststoffteile, und im wesentlichen nur diese, als Siebüberlauf abgetrennt werden. Die abgetrennten Kunststoffkomponenten stellen vielfach ebenfalls ein wertvolles und wiederverarbeitbares Ausgangsprodukt dar, das infolge der sauberen Trennung von den anderen Abfallkomponenten zu Kunststofferzeugnissen guter Qualität verarbeitet werden kann.

Die Trennung von Agglomerat und Kunststoffteilen kann nicht

0054754

nur mit mechanischen Trennmethoden, sondern auch durch Schwerkraft oder Windsichtung erfolgen. Auch können die Kunststoffteilchen, insbesondere Folienfetzen, während des Agglomerierens durch Absaugen entfernt werden.

Je nach der Art der zu behandelnden Abfallgemische kann es zweckmäßig sein, nach der Zerkleinerung und vor der Agglomerierung eine Vorsiebstufe einzufügen, bei der grobe Kunststoffteile, wie Folienfetzen, abgesondert werden, bevor die Mischung dem Mischgranulatur zugeführt wird. Wenn das zerkleinerte Gemisch auch von den übrigen Abfallkomponenten noch relativ grobe Teilchen enthält, kann der Siebüberlauf der Vorsiebung zu der Zerkleinerung zurückgeführt werden.

Bei bestimmten Abfallgemischen kann es vorkommen, daß diese keinen ausreichenden Anteil an Binderstoffen und Feinstoffen enthalten, um bei der Agglomerierung eine für die Siebung günstige Konsistenz zu bekommen. In diesem Fall ist es zweckmäßig, bei der Zerkleinerung und/oder bei der Agglomerierung Binderstoff zuzusetzen. Als Binderstoffe eignen sich etwa teilentwässerte Klärschlämme, Erde, Ton, Filterstaub, Kohleschlämme, Flugasche, Zementfilterkuchen, Zementrohstoffe, Lackschlämme, Altöl oder ölhaltige Bleicherden aus Raffinerien. Besonders bevorzugt sind als Binderstoffe Ton, Flugasche oder Klärschlämme. Durch Zusatz solcher Binderstoffe kann man bei der Agglomerierung in jedem Fall krümelige bis fein granulierte Agglomerate der erwünschten siebfähigen Konsistenz erhalten. Auf diese Weise werden auch Abfälle anderen Ursprungs umweltfreundlich entsorgt.

Wenn man die von den Kunststoffabfällen befreiten oder im wesentlichen befreiten Abfallagglomerate als Ausbrennstoff für die keramische Industrie verwenden will, werden vorzugsweise Abfälle mit höherem Heizwert, wie Abfallpapier und/oder Verpackungsabfälle von Großmärkten, Industriebetrieben usw., benutzt. Die Zerkleinerung solcher Abfälle auf herkömmliche Weise ist problematisch, da man einerseits eine hohe Feinheit der Papierkomponente bekommen muß und da andererseits darin meist auch Metallteile, wie Klammern und dergleichen, enthalten sind. Maschinen, die eine ausreichende Feinheit des Papiers erzielen könnten, wie Schneidmühlen, Zerfaserer usw., sind an ihren Schneidkanten außerordentlich empfindlich gegen die Metallteile, während hierfür unempfindliche Zerkleinerungsmaschinen, wie Prallmühlen oder Hammermühlen, bei solchen leichten Stoffen einen unzureichenden Zerkleinerungseffekt haben. Diese Problematik umgeht das erfindungsgemäße Verfahren, wobei als Bindermaterial zweckmäßig Ton zugegeben wird, der das Mahlgut schwerer werden läßt und eine gute Zerkleinerung auch in solchen Zerkleinerungsmaschinen ermöglicht, die nicht gegen Metallteile empfindlich sind.

Die bei den oben beschriebenen Verfahrensvarianten erhaltenen Agglomerate, die im wesentlichen frei von Kunststoffteilen sind oder zumindest einen erheblich reduzierten Kunststoffgehalt besitzen, können für verschiedene Zwecke verwendet werden, wie für die Kompostierung oder, wie erwähnt, als Ausbrennstoffe für keramische Erzeugnisse. Bei der letzteren Anwendung bekommt man Keramikerzeugnisse mit der inneren Porenstruktur, da beim Brennen der Keramikerzeugnisse der der Keramikmasse zugemischte Füllstoff verbrennt und im Inneren des Keramikerzeugnisses geschlossene Poren hinterläßt. Die dabei entstehenden Verbrennungsgase und Kokse können den Energiehaushalt des Brennvorganges weitgehend decken.

Soweit die Agglomerate für die Kompostierung verwendet werden sollen, ist es zweckmäßig, Feuchtigkeit und Binderstoffe in der Form von Klärschlamm zuzusetzen.

Weiterhin können die erfindungsgemäß erhaltenen Agglomerate, insbesondere bei Verwendung von Ton als Binderstoff, direkt als Ziegelgrundstoff verwendet werden, wobei es in diesem Fall zweckmäßig ist, mindestens 30 Gewichts-%, bezo-

0054754

gen auf das Gewicht des feuchten Abfalls, Ton als Binderstoff zuzusetzen.

Eine zweckmäßige Variante des Verfahrens nach der Erfindung besteht darin, daß man Hausmülle zerkleinert, das zerkleinerte Gemisch mit ausreichendem Feuchtigkeitsgehalt zwischenlagert und dann in einem Mischgranulator agglomeriert und das dabei erhaltene Gemisch von Agglomerat und Kunststoffteilen siebt, wobei der Kunststoff von dem Agglomerat abgetrennt wird.

Bei einer anderen zweckmäßigen Ausführungsform, die auch von Hausmüll ausgeht, wird bei der Zerkleinerung und/oder Granulierung Wasser, gegebenenfalls in Form von Schlamm, sowie gegebenenfalls Staub oder anderes Bindermaterial zugegeben.

Bei der Verwendung von Verpackungsabfall geht man zweckmäßig einstufig vor, indem man in einer Vorrichtung zerkleinert, mischt und agglomeriert und dabei dieser Zerkleinerungs-/Agglomerierungsvorrichtung Wasser und Ton zusetzt. Bei einer anderen zweckmäßigen Ausführungsform, die von Verpackungsabfall ausgeht, arbeitet man mehrstufig, indem man zunächst zerkleinert und dabei Wasser und Ton zusetzt, an die Zerkleinerung eine Vorsiebung anschließt und entweder grobe Kunststoffteile absondert oder den groben Siebüberlauf in die Zerkleinerungsstufe zurückführt. Das bei der Vorsiebung erhaltene, durch die Siebmaschen hindurchgehende Produkt wird einem Mischgranulator zugeführt, dem außerdem Wasser und Ton zugegeben wird. An die darin stattfindende Agglomerierung schließt sich die Feinsiebung an, bei der feinere Kunststoffteilchen von dem Agglomerat abgetrennt werden.

Beispiel 1

In diesem Beispiel wird ein Produkt angestrebt, das als Ausbrennstoff in keramischen Erzeugnissen verwendet werden kann. Hierzu werden 40 bis 80 Gewichtsteile Verpackungsabfälle mit 60 bis 20 Gewichtsteilen Ton in einer Zerkleinerungsvorrichtung, einem Prallreißer, 30 Sekunden behandelt, nachdem 25 Gewichtsteile Wasser zugegeben wurden. Nach einer Zwischenlagerung von mehreren Stunden, bei der sich die Papier- und Kartonteilchen mit Wasser vollsaugen, wird das Gemisch in einen Mischgranulator überführt und darin 2 Minuten behandelt, wobei gegebenenfalls nochmals Wasser und/oder Ton zugegeben werden können. Das krümelige Material aus dem Mischgranulator wird nun gesiebt, wobei etwa 10 bis 40 % Siebüberlauf (Kunststoffteilchen, nicht magnetische Metallteilchen, Gummi usw.) und 90 bis 60 % krümeliges Feingut entstehen, das seinerseits direkt als Ausbrennstoff für die keramische Industrie verwendet werden kann.

## Beispiel 2

In diesem Beispiel wird ein für die Kompostierung geeignetes Produkt erhalten. 50 bis 59 Gewichtsteile Hausmüll werden mit 10 bis 50 Gewichtsteilen Klärschlamm mit 15 bis 35 % Trockenstoff ohne weitere Wasserzugabe vermischt.

Zerkleinerung und Mischgranulierung erfolgen wie im Beispiel 1. Nach der ersten Zerkleinerungsstufe erfolgt eine Vorsiebung bei 50 mm, danach die Granulierung während 2 bis 4 Minuten und danach eine Feinsiebung bei ca. 10 mm.

0054754

**1** Patentansprüche

1. Verfahren zur Abtrennung von Kunststoffabfällen von diese enthaltenden Abfallgemischen, dadurch gekennzeichnet, daß man den kunststoffhaltigen Abfall in feuchtem Zustand zerkleinert, mischt und agglomeriert und das so erhaltene Gemisch in Agglomerat und Kunststoffteile auftrennt.

2. Verfahren nach Anspruch 1, dadurch gekennzeichnet, daß man mit einer solchen Energie zerkleinert, daß vorwiegend nur Stoffe geringerer Reißfestigkeit als die der enthaltenen Kunststoffe zerkleinert werden.

3. Verfahren nach Anspruch 1 und 2, dadurch gekennzeichnet, daß man die Feuchtigkeit des kunststoffhaltigen Abfalles vor oder bei dem Zerkleinern so einstellt, daß die feuchtigkeitsaufnehmenden Komponenten eine gegenüber den enthaltenen Kunststoffen deutlich verschiedene Reißfestigkeit bekommen.

4. Verfahren nach Anspruch 1 bis 3, dadurch gekennzeichnet, daß man während 20 Sekunden bis 10 Minuten zerkleinert.

5. Verfahren nach Anspruch 4, dadurch gekennzeichnet, daß man in der gleichen Vorrichtung mit einer Verweilzeit von 1 bis 10 Minuten zerkleinert und agglomeriert.

6. Verfahren nach Anspruch 4, dadurch gekennzeichnet, daß man zunächst in einer Vorrichtung mit einer Verweilzeit von 30 Sekunden bis 5 Minuten zerkleinert und anschließend, vorzugsweise nach Zwischenlagerung, in einem Mischgranulator agglomeriert.

7. Verfahren nach Anspruch 1 bis 6, dadurch gekennzeichnet, daß man Feuchtigkeit bei der Zerkleinerung und bei der Agglomerierung zugibt.

0054754

8. Verfahren nach Anspruch 1 bis 6, dadurch gekennzeichnet, daß man die Feuchtigkeit in Form von Wasser oder Wasserdampf zugibt.

9. Verfahren nach Anspruch 1 bis 8, dadurch gekennzeichnet, daß man das Abfallgemisch vor der ersten Zerkleinerungsstufe, z.B. durch Besprühen oder Beregnen, befeuchtet.

10. Verfahren nach Anspruch 1 bis 9, dadurch gekennzeichnet, daß man Feuchtigkeit in Form von Schlamm zusetzt.

11. Verfahren nach Anspruch 1 bis 10, dadurch gekennzeichnet, daß man bei der Zerkleinerung und/oder Agglomerierung Binderstoffe zusetzt.

12. Verfahren nach Anspruch 11, dadurch gekennzeichnet, daß man als Binderstoffe Ton, Flugasche und/oder Klärschlamm zusetzt.

13. Verfahren nach Anspruch 1 bis 12, dadurch gekennzeichnet, daß man nach dem Zerkleinern unter Abtrennung grober Kunststoffteile vorsiebt und vorzugsweise grobe Anteile des zerkleinerten Abfalles zur Zerkleinerung zurückführt.

14. Verfahren nach Anspruch 12, dadurch gekennzeichnet, daß man mindestens 30 Gewichts-%, bezogen auf das Gewicht des feuchten Abfalles, Ton als Binderstoff zusetzt.

15. Verfahren nach Anspruch 1 bis 14, dadurch gekennzeichnet, daß man während der Agglomerierung die zerkleinerten Komponenten des Gemisches einer weiteren Feinzerkleinerung unterwirft.

16. Verfahren nach Anspruch 1 bis 15, dadurch gekennzeichnet, daß man die Trennung von Agglomerat und Kunststoffteilchen durch Sieben bewirkt und dabei die Kunststoffteilchen als Siebüberlauf abtrennt.

-3-                                    0054754

17. Verfahren nach Anspruch 1 bis 16, dadurch gekennzeichnet, daß man wenigstens einen Teil der Kunststoffteilchen während des Agglomerierens oder nach dem Agglomerieren durch Absaugen oder Luftsichten von dem Agglomerat trennt.

18. Verwendung der nach Anspruch 1 bis 17 gewonnenen Agglomerate als Ausbrennstoffe für keramische Erzeugnisse
oder als Kompostierungsstoffe.

19. Verwendung der nach Anspruch 18 gewonnenen Agglomerate
als Ziegelgrundstoff.